# EUROPEAN PATENT APPLICATION

(11) **EP 3 486 037 A1**
(43) Date of publication of application: **22.05.2019**
(21) Application number: 17202763.3
(22) Date of filing: 21.11.2017
(51) Int. Cl.: B25J 9/00

(54) **EXOSKELETON**

(71) Applicant: La Comunidad Universitaria del Golfo Centro A.C., 72810 Puebla (MX)
(72) Inventor: ORTEGA, Juan Carlos Colín, 72805 Puebla (MX); RAMONDT, Philip, 11400, CDMX, Colonia Popotla (MX)
(74) Representative: De Vries & Metman

(57) **Abstract**

An exoskeleton is presented which is intended for use on the upper body of a person. It comprises a rigid support member, a carrier attachable to said support member and arranged to be worn on the upper body of the person in such a manner that the support member is located on the back of the person, two guide arms each extending upwardly and forwardly from the support member and each having a free arm end which, when the exoskeleton is used on the upper body of the person, is located at a respective side of the head and above the respective shoulder of the person, a flexible member at least partially extending movably along each guide arm and beyond said free arm end and comprising a first end which is arranged to engage a respective arm of the person, and preloading means for preloading the flexible member in such a manner that a lifting force is applied to the arm of the person.

## Description

The invention relates to an exoskeleton intended for use on the upper body of a person.

There are situations in which a person has to maintain a position with raised arms during a prolonged time. For example, automotive assembly lines comprise work stations at which employees carry out operations with raised arms. Such operations often tend to cause an overload of muscles, especially of the musculus deltoideus at the shoulder joint, because the employee has to maintain the arms in the raised position notwithstanding the gravitational force and possibly the weight of any tools. This may lead to a range of injuries, such as, for example, sprains, tendonitis and bursitis.

Complicating factors in the search for a remedy are, among others, the limitations imposed on the time which is available to carry out an operation at a work station, the care to be taken for components (such as for example automotive parts being painted) and the fact that often multiple employees simultaneously are working at a short range. Moreover, the shoulder joint is a very complicated joint offering a large range of degrees of freedom, for example for allowing abduction, adduction, flexion and forward and backward movements.

In view of the above it is an object of the present invention to provide an exoskeleton for use on the upper body of a person.

In accordance with the present invention an exoskeleton is provided comprising a rigid support member, a carrier attachable to said support member and arranged to be worn on the upper body of the person in such a manner that the support member is located on the back of the person, two guide arms each extending upwardly and forwardly from the support member and each having a free arm end which, when the exoskeleton is used on the upper body of the person, is located at a respective side of the head and above the respective shoulder of the person, a flexible member at least partially extending movably along each guide arm and beyond said free arm end and comprising a first end which is arranged to engage a respective arm of the person, and preloading means for preloading the flexible member in such a manner that a lifting force is applied to the arm of the person.

The exoskeleton according to the invention provides an orthesis-like device which offers a stable support for the arms of the person using the exoskeleton. The flexible member is able of keeping the arms in a desired raised position while offering the person sufficient degree of freedom for moving his/her arms. The position of the support member (which supports the guide arms along which the flexible members extend) on the back of the person and the position of the guide arms above the shoulder of the person are helpful in maintaining a free space in front of the person who therefore is not hindered in carrying out the desired operations and who thus also can carry out operations in close proximity to other persons or co-workers.

In one embodiment the free arm end is arranged to be located substantially vertically above the respective shoulder joint of the person when the exoskeleton is used on the upper body of the person. Such a position offers good results in terms of relieving the shoulder joint.

In another embodiment the free arm end is arranged to be located substantially at the height of an ear lobe of the person when the exoskeleton is used on the upper body of the person. Such a position may help to further optimise the design and function of the exoskeleton.

In one embodiment of the exoskeleton each flexible member has a second end attached to the support member, wherein the preloading means comprise at least one spring member of which a first end is attached to the support member and of which a second end directly or indirectly engages the flexible member between its first and second ends.

In such an embodiment it is possible that the flexible member, starting from its second end, successively extends in a first direction along the support member, around a pulley, in an opposite second direction and finally towards, along and beyond the guide arm towards its first end and wherein the pulley is movable in a direction in parallel to said first and second directions, wherein an auxiliary spring member is provided for preloading the pulley in said first direction.

Depending on the position of the respective arm of the person using the exoskeleton and thus depending on the position of the first end of the flexible member, the pulley under influence of the auxiliary spring member will assume a corresponding position for maintaining a supporting force on the arm.

It is conceivable that the pulley is mounted on a slide, wherein the support member comprises a guide along which the slide can move and wherein the auxiliary spring member with opposite ends engages the slide and the support member, respectively. However, other constructions for offering the pulley the possibility to move as desired, are possible too.

In such an embodiment it may be advantageous if the slide cooperates with a locking mechanism which, in a locked position, does block a movement of the slide in the second direction, but allows a movement in the first direction. This means that a person may raise an arm to a higher position (as a result of which the pulley (and slide) moves in the first direction) but that a lowering of the arm is prevented.

However, for allowing an arm to be lowered, the locking mechanism may be movable to an unlocked position in which a movement of the slide in the second direction is possible too.

In one embodiment the locking mechanism comprises a ratchet mechanism with a toothed rack and a spring-loaded rotatable claw intended for lockingly engaging the toothed rack. Other locking mechanisms are conceivable too, however.

For achieving the desired movement of the locking mechanism to an unlocked position in an embodiment with the above ratchet mechanism, alongside the toothed rack a push bar may extend which is movable between a disengagement position in which the rotatable claw lockingly can engage the toothed rack and a disengagement position in which it blocks the rotatable claw from lockingly engaging the toothed bar.

In one embodiment the movement of the push bar is controlled by a solenoid. Other driving mechanisms (for example hydraulic or pneumatic) are conceivable too, however.

In one embodiment, for each flexible element at least one sensor is provided for directly or indirectly determining a tension in the flexible member and a control means for, when said tension exceeds a defined limit, causing the locking mechanism to move to the unlocked position. Thus it is possible to achieve an unlocking of the locking mechanism only when the tension in the flexible member exceeds said limit. Said limit generally will be chosen such that it will not be exceeded under normal operational circumstances (for example when a person carries out standard operations with the arms in a raised position).

Specifically it is possible that the second end of the flexible member is attached to the support member through a main spring member, wherein the sensor is adapted for indirectly determining the tension in the flexible member by determining the spring force of the main spring member. This means that the sensor will react based upon the spring force of the main spring (for example when said spring force exceeds a certain limit). Determining the spring force in the main spring member may be carried out by determining a deformation of the main spring member.

In a special embodiment, for each flexible element two sensors are provided, of which one sensor determines the tension in the flexible element through the spring force in the main spring member and of which the other sensor measures the positions of the opposite ends of the auxiliary spring member. This may further improve the manner in which an unlocking of the locking mechanism is caused.

It further may be advantageous if the spring constant of the main spring exceeds the spring constant of the auxiliary spring.

In one embodiment the spring constant of the main spring member is such that the spring member is not deformed when the flexible member only is loaded by the weight of the respective arm of the person. In combination with the use of at least one sensor as described above, such an embodiment leads to an exoskeleton which allows the arms to be raised to a desired position (after which the arms are maintained in such a raised position by the locking mechanism without the main spring member being deformed), but in which the person using the exoskeleton may achieve an unlocking of the locking mechanism and thus a lowering of the arms by increasing the downward force by the arms that much that the main spring member is deformed, which deformation will be sensed by the sensor which then will cause the unlocking of the locking mechanism. Increasing the downward force by the arms for example may be achieved by a short downward jerk.

A timing mechanism may be provided that assures that the unlocked position of the locking mechanism is maintained for a certain time after the main spring member has been deformed, such as to allow the desired lowering movement of the arms. It is also possible that such an unlocked position will be maintained (for example by the control means) as long as the downward movement of the arms (and thus the corresponding movement of the slide in the second direction) continues and that the locked position will be activated again once said movement has stopped.

In one embodiment the carrier and the support member comprise cooperating connecting members for releasably connecting the carrier to the support member. This means that the person may remove the support member without removing the carrier.

For example the support member may be provided with a U-shaped brace facing the back of the person, whereas the carrier comprises pockets for receiving lower and upper ends of said brace. This allows to quickly connect and disconnect the support member and carrier.

In one embodiment the brace comprises downwardly tapering openings for receiving projections of the support member for realising a quick release connection between the brace and the support member. Thus the brace may be removed from the support member (for example for replacement by another brace with other dimensions suitable for a taller or shorter person).

The carrier may comprise a flexible harness, preferably provided with quick connect and disconnect buckles (and preferably with resizable straps for an optimised adaptation to the body size and shape of the person using the exoskeleton).

In one embodiment the first end of the flexible member is provided with an arm rest intended for engaging the arm of the person just above the elbow. Preferably such an arm rest will be shaped ergonomically and will be made of, or padded with, a material preventing pressure spots.

It is conceivable that the arm rest comprises a substantially rigid shell for partially surrounding and supporting the arm and strap means for fully surrounding the arm and fixing the shell to the arm. For example the strap means comprise Velcro.

In a special embodiment the exoskeleton according to the invention may be provided with a telemetry assembly adapted for gathering information about the use of the exoskeleton and sending this information to an external device. For example such a telemetry assembly may be adapted for gathering information such as the tension in the flexible member, number and magnitude of movements of the flexible member. The acquired information may be used for improving operational processes.

The flexible member may be a cable, belt or rope, whereas the spring members may comprise tension springs.

The support member may be provided with a head rest. Generally the support member will be manufactured from a strong yet lightweight material, preferably a plastics material and may define a protecting enclosure for most of the components of the exoskeleton (apart from the guide arms and the carrier).

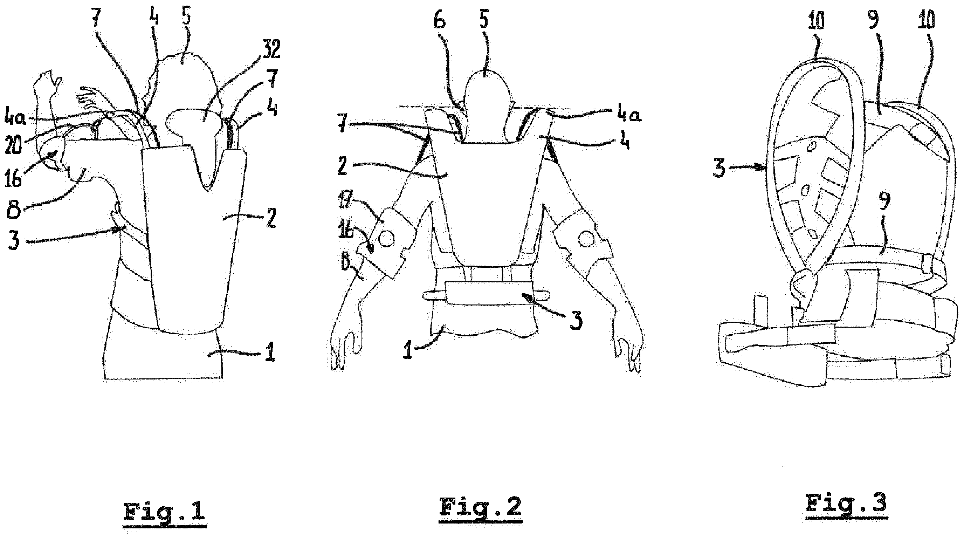

Hereinafter the invention will be elucidated while referring to the drawing, in which:
Firstly referring to figure 1, a person 1 is shown wearing on his back an embodiment of an exoskeleton in accordance with the present invention. The exoskeleton is intended for use as an orthesis-like device on the upper body of the person and comprises a rigid support member 2. In figure 1 this support member is illustrated as a substantially closed enclosure in which the operational parts of the exoskeleton (which will be described below) are housed out of sight and protected against outer influences. The support member generally will be provided with a removable cover for gaining access to its inner operational parts or components.

In a manner to be explained later, a carrier 3 is attachable to said support member 2 and is arranged to be worn on the upper body of the person 1 in such a manner that the support member 2 is positioned on or at the back of the person. The support member 2 is provided with two guide arms 4 each extending upwardly and forwardly from the support member 2. For example, these guide arms are bow-shaped. Each guide arm 4 has a free arm end 4a which, when the exoskeleton is worn or used on the upper body of the person 1, is located at a respective side of the head 5 of the person and substantially above the respective shoulder of the person 1. Preferably the free arm end 4a then is arranged to be located substantially vertically above the respective shoulder joint of the person 1 (both in a frontal and lateral view) and substantially at the height of an ear lobe 6 of the person (as indicated schematically by a dotted line in figure 2) .

The exoskeleton further comprises two flexible members 7 (for example cables, belts or ropes or similar elements) which each, starting from the part of the support member below the guide arms, at least partially extend movably along a respective guide arm 4 and beyond said free arm end 4a. It is conceivable that the flexible members 7 are guided in a flexible sheath which over at least part of its length is attached to the support member 2 and arm 4. Such a sheath may end at the free arm end 4a, such that the flexible member 7 from there extends freely towards a flexible member's first end which is arranged to engage (and support, as will appear later) a respective arm 8 of the person 1.

Further the exoskeleton comprises preloading means (not visible in figure 1 because they are located inside the support member 2) for preloading the flexible member 7 in such a manner that a lifting force may be applied to the arm 8 of the person 1. The magnitude of such a lifting force may vary, but preferably will be sufficient to keep an arm in a stable raised position.

Figure 1 also illustrates a head rest 32.

As illustrated in figure 3, it is possible that the carrier 3 comprises a flexible harness, preferably provided with quick connect and disconnect buckles 9 and preferably with resizable straps (such as for example shoulder straps 10) for an optimised adaptation to the body shape and size of the person 1 using the exoskeleton. The shape and design of the carrier 3 generally will be optimised for a comfortable fit, also when used for a prolonged time in combination with the support member 2.

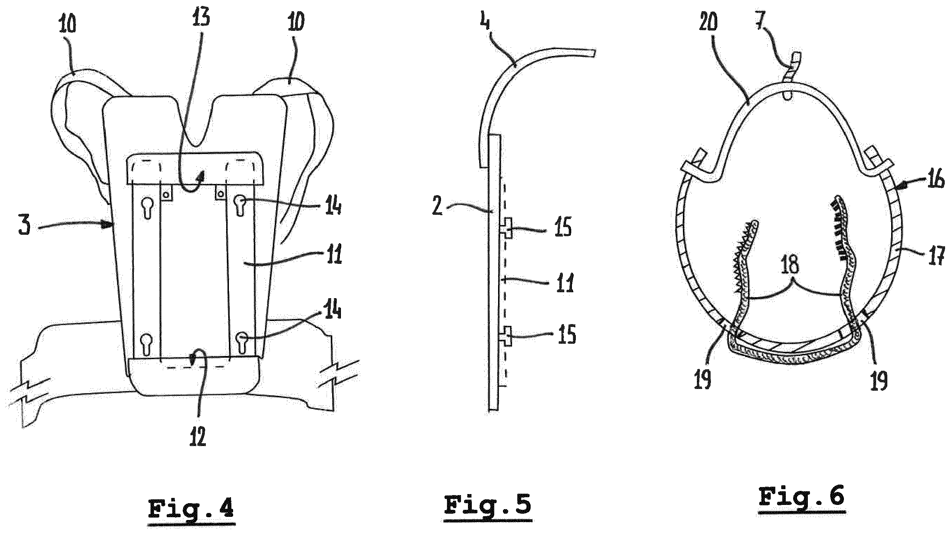

As illustrated in an exemplary embodiment in figures 4 and 5, the carrier 3 and the support member 2 comprise cooperating connecting members for releasably connecting the carrier to the support member. Here these connecting members comprise a U-shaped brace 11 (which defines a disconnectable part of the support member 2) facing the back of the person, and pockets 12, 13 provided on the carrier 3 (for example stitched thereto) for releasably receiving lower and upper ends of said brace 11. Further, the brace 11 in this specific embodiment also comprises downwardly tapering openings 14 (see figure 4) for receiving projections 15 (see figure 5) of the support member 2. This also allows to realize a quick release connection between the brace and the support member and thus indirectly between a main part of the support member and the carrier. Thus one can detach the support member 2 from the carrier 3 in two different manners: firstly by removing the projections 15 of the support member from the openings 14 of the U-shaped brace 11 (such that the brace 11 remains connected to the carrier 3), and secondly by removing the brace 11 from the pockets 12, 13 of the carrier 3 (such that the brace remains connected to the remaining main part of the support member 2).

In other embodiments also only one of these (or other) options for defining a releasable connection between the support member 2 and the carrier 3 may be provided.

For engaging the arm 8 of a person 1 the first end of the flexible member 7 is provided with an arm rest 16 intended for engaging the arm 8 of the person just above the elbow. As appears from a schematical cross section of the arm rest in figure 6, the arm rest 16 in one embodiment comprises a substantially rigid shell 17 for partially surrounding and supporting an arm 8 and strap means 18 (extending through two windows 19 in the shell 17 and preferably comprising a fabric hook and loop fastener, such as Velcro®) for fully surrounding the arm and fixing the shell to the arm. Two upper ends of the shell 17 are connected by a support bar 20 to which the flexible member 7 is attached (directly or indirectly, for example through a ring which is slidable and rotatable with respect to the support bar 20).

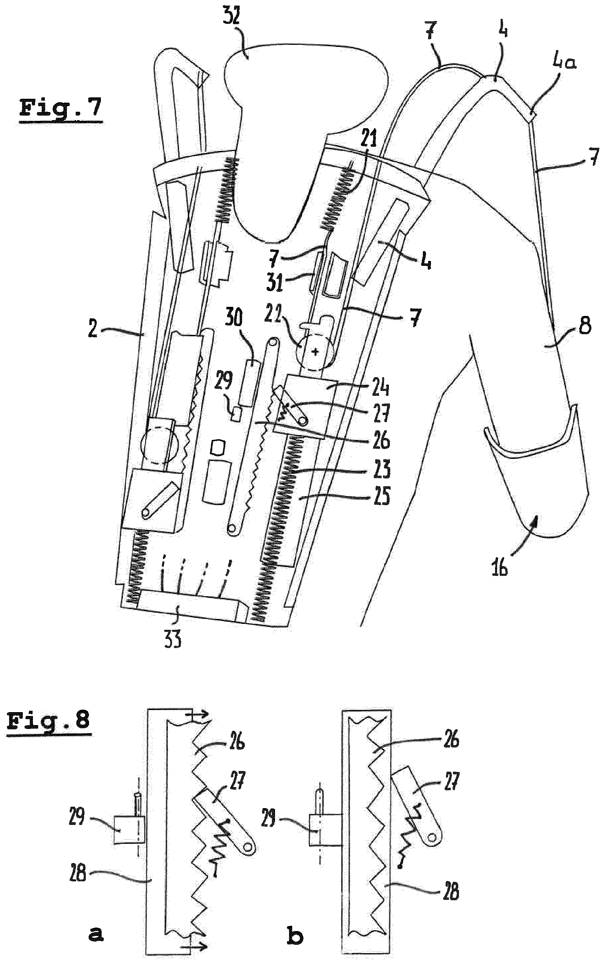

For a detailed description of the preloading means for preloading the flexible members 7, now reference is made to figure 7 which shows an embodiment of the exoskeleton with a support member 2 in an open position (that means a position in which a cover or similar part has been removed) in which interior parts or components which are responsible for the operation of the exoskeleton in general, are visible. Only the preloading means for one flexible member 7 located at one side of the support member 2 will be described, keeping in mind that the preloading means for the other flexible member 7 will be similar (but generally mirror-imaged).

The flexible member 7 has a second end which in the illustrated embodiment is attached to the support member 2 through a main spring member 21. Starting from this main spring member 21, the flexible member 7 successively extends in a first direction (in figure 7 downwardly) along the support member 2, around a pulley 22, in an opposite second direction (in figure 7 upwards) and finally towards, at least partially along and beyond the guide arm 8 towards its first end with the arm rest 16. The pulley 22 is movable in a direction in parallel to said first and second directions and an auxiliary spring member 23 is provided for preloading the pulley 22 in said first (downward) direction.

For enabling its movement, the pulley 22 is mounted on a slide 24 which cooperates (slides along) a guide 25 which assumes a stationary position in (and is attached to) the support member 2. Opposite ends of the auxiliary spring member 23 engage the slide 24 and the support member 2, respectively.

Also other mechanisms may be used for guiding the slide 24 with pulley 22 along the support member 2, as will be clear for a person skilled in the art. Further, although in the illustrated embodiment the spring members 21 and 23 have been designed as purely mechanical (specifically tension) springs, also other spring members (such as, for example, of pneumatic or hydraulic nature) may be used with a similar effect.

In the present embodiment the spring constant of the main spring member 21 exceeds the spring constant of the auxiliary spring member 23. Further the spring constant of the main spring member 21 is such that this spring member is not deformed when the flexible member 7 only is loaded by the weight of the respective arm 8 of the person (in a substantially stable, raised position).

As a result of the design described above, raising an arm 8 results in a downward movement of the slide 24 with pulley 22 along the guide 25 (due to gravity but also due to the spring force of the auxiliary spring member 23), whereas a downward movement of the arm would yield an upward movement of the slide and pulley.

However, because it is an object of the exoskeleton to maintain an arm 8 in a raised position, the slide 24 cooperates with a locking mechanism which, in a locked position, does block a movement of the slide in the second (upward) direction, but allows a movement in the first (downward) direction (for moving the arm 8 to a still higher position). But, because it is necessary that at some time the person 1 also will be able to again lower his/her arm, the locking mechanism also should have the possibility to be moved to an unlocked position, if desired by the person, in which a movement of the slide 24 with pulley 22 in the second (upward) direction is possible too. An embodiment in which these features are incorporated will be discussed below.

Thus, the locking mechanism comprises a ratchet mechanism with a toothed rack 26 and a spring-loaded rotatable claw 27 mounted on the slide 24 which is intended for lockingly engaging the toothed rack 26. From the disposition of the toothed rack 26 and claw 27 as illustrated in figure 7 it will be clear that a downward movement of the slide 24 along the guide 25 is possible while the spring-loaded claw 27 rides over the successive teeth of the toothed rack 26. A reverse, upward, movement however will be blocked because the claw 27 will engage lockingly behind a tooth. Thus raising an arm 8 will automatically lead to a situation in which, after reaching a desired raised position, a subsequent lowering of the arm is not possible and the arm is maintained in the raised position by the exoskeleton.

It is noted that in the embodiment illustrated in figure 7 the toothed rack 26 has such a length that, starting in a position in which the slide 24 is at its highest point (arm 8 totally lowered), during the first part of the downward movement of the slide 24 (upward movement of the arm 8) a locking cooperation between the claw 27 and toothed rack 26 does not yet occur. This means that a certain raising and a subsequent lowering of the arm 8 is allowed without causing a locking operation. Only when the arm has been raised sufficiently, the claw 27 will start to cooperate in a locking manner with the teeth of the toothed rack 26.

As illustrated in a schematic manner and on a larger scale in figure 8, alongside the toothed rack 26 a push bar 28 extends which is movable between an engagement position (figure 8a) in which the rotatable claw 27 lockingly can engage the toothed rack 26 and a disengagement position (figure 8b) in which it blocks the rotatable claw from lockingly engaging the toothed bar. The movement of the push bar 28 is caused by an eccentric drive 29 which, for example, may be driven by a solenoid (see figure 7). Other drive mechanisms for the push bar 28 are conceivable too, however.

For controlling the solenoid at least one sensor 31 is provided for determining a tension in the flexible member 7 and a control means 33 for, when said tension exceeds a defined limit, causing the locking mechanism to move to the unlocked position. Such a sensor 31 also may be adapted for indirectly determining the tension in the flexible member 7 by determining the spring force or elongation of the main spring member 21.

When the arm 8 is in a raised position and the claw 27 lockingly engages the toothed rack 26, the arm is maintained in its raised position in which the person can carry out operations at an elevated level without too much of an effort. When the person likes to lower the arm 8, he/she will give a downward jerk on the arm which leads to an elongation of the main spring member 21 beyond a certain limit (it is possible that the spring constant of the main spring member 21 is such that an elongation will not occur under normal circumstances, that is when the person is carrying out normal operations, and that any elongation already is an elongation beyond said limit) which will be sensed by the sensor 31 which sends a signal to the control means 33 which will activate the solenoid 30 for moving the push bar 28 to its disengagement position in which the claw 27 is freed from the toothed rack 26 and the slide 24 can move upwards for lowering the arm 8.

A delay function may be programmed into the control means 33 which assures that the solenoid 30 is activated for a certain time period after the sensor 21 has stopped sending a signal, for assuring that the arm 8 may be lowered sufficiently before the locking mechanism 26-30 is activated again and a further lowering of the arm is prevented.

## Claims

1. Exoskeleton intended for use on the upper body of a person, comprising a rigid support member, a carrier attachable to said support member and arranged to be worn on the upper body of the person in such a manner that the support member is located on the back of the person, two guide arms each extending upwardly and forwardly from the support member and each having a free arm end which, when the exoskeleton is used on the upper body of the person, is located at a respective side of the head and above the respective shoulder of the person, a flexible member at least partially extending movably along each guide arm and beyond said free arm end and comprising a first end which is arranged to engage a respective arm of the person, and preloading means for preloading the flexible member in such a manner that a lifting force is applied to the arm of the person.

2. Exoskeleton according to claim 1, wherein the free arm end is arranged to be located substantially vertically above the respective shoulder joint of the person when the exoskeleton is used on the upper body of the person.

3. Exoskeleton according to claim 1 or 2, wherein the free arm end is arranged to be located substantially at the height of an ear lobe of the person when the exoskeleton is used on the upper body of the person.

4. Exoskeleton according to any of the previous claims, wherein each flexible member has a second end attached to the support member and wherein the preloading means comprise at least one spring member of which a first end is attached to the support member and of which a second end directly or indirectly engages the flexible member between its first and second ends.

5. Exoskeleton according to claim 4, wherein the flexible member, starting from its second end, successively extends in a first direction along the support member, around a pulley, in an opposite second direction and finally towards, along and beyond the guide arm towards its first end and wherein the pulley is movable in a direction in parallel to said first and second directions, wherein an auxiliary spring member is provided for preloading the pulley in said first direction.

6. Exoskeleton according to claim 5, wherein the pulley is mounted on a slide, wherein the support member comprises a guide along which the slide can move and wherein the auxiliary spring member with opposite ends engages the slide and the support member, respectively.

7. Exoskeleton according to claim 6, wherein the slide cooperates with a locking mechanism which, in a locked position, does block a movement of the slide in the second direction, but allows a movement in the first direction.

8. Exoskeleton according to claim 7, wherein the locking mechanism is movable to an unlocked position in which a movement of the slide in the second direction is possible too.

9. Exoskeleton according to claim 7 or 8, wherein the locking mechanism comprises a ratchet mechanism with a toothed rack and a spring-loaded rotatable claw intended for lockingly engaging the toothed rack.

10. Exoskeleton according to claim 8 in combination with claim 9, wherein alongside the toothed rack a push bar extends which is movable between a disengagement position in which the rotatable claw lockingly can engage the toothed rack and a disengagement position in which it blocks the rotatable claw from lockingly engaging the toothed bar.

11. Exoskeleton according to claim 10, wherein the movement of the push bar is controlled by a solenoid.

12. Exoskeleton according to any of the claims 8-11, wherein for each flexible element at least one sensor is provided for directly or indirectly determining a tension in the flexible member and a control means for, when said tension exceeds a defined limit, causing the locking mechanism to move to the unlocked position.

13. Exoskeleton according to claim 12, wherein the second end of the flexible member is attached to the support member through a main spring member and wherein the sensor is adapted for indirectly determining the tension in the flexible member by determining the spring force of the main spring member.

14. Exoskeleton according to claim 13, wherein for each flexible element two sensors are provided, of which one sensor determines the tension in the flexible element through the spring force in the main spring member and of which the other sensor measures the positions of the opposite ends of the auxiliary spring member.

15. Exoskeleton according to claim 13 or 14, wherein the spring constant of the main spring exceeds the spring constant of the auxiliary spring.

16. Exoskeleton according to claim 15, wherein the spring constant of the main spring member is such that the spring member is not deformed when the flexible member only is loaded by the weight of the respective arm of the person.

17. Exoskeleton according to any of the previous claims, wherein the carrier and the support member comprise cooperating connecting members for releasably connecting the carrier to the support member.

18. Exoskeleton according to claim 17, wherein the support member is provided with a U-shaped brace facing the back of the person, whereas the carrier comprises pockets for receiving lower and upper ends of said brace.

19. Exoskeleton according to claim 18, wherein the brace comprises downwardly tapering openings for receiving projections of the support member for realising a quick release connection between the brace and the support member.

20. Exoskeleton according to any of the previous claims, wherein the carrier comprises a flexible harness, preferably provided with quick connect and disconnect buckles and preferably with resizable straps for an optimised adaptation to the body shape of the person using the exoskeleton.

21. Exoskeleton according to any of the previous claims, wherein the first end of the flexible member is provided with an arm rest intended for engaging the arm of the person just above the elbow.

22. Exoskeleton according to claim 21, wherein the arm rest comprises a substantially rigid shell for partially surrounding and supporting the arm and strap means for fully surrounding the arm and fixing the shell to the arm.

23. Exoskeleton according to claim 22, wherein the strap means comprise a fabric hook and loop fastener.

24. Exoskeleton according to any of the previous claims, provided with a telemetry assembly adapted for gathering information about the use of the exoskeleton and sending this information to an external device.

25. Exoskeleton according to claim 24, wherein the telemetry assembly is adapted for gathering information such as the tension in the flexible member, number and magnitude of movements of the flexible member.

26. Exoskeleton according to any of the previous claims, wherein the flexible member is a cable, belt or rope.

27. Exoskeleton according to any of the previous claims, wherein the spring members comprise tension springs.

28. Exoskeleton according to any of the previous claims, wherein the support member is provided with a head rest.
